# EUROPEAN PATENT SPECIFICATION

(11) **EP 2 439 432 B1**
(45) Date of publication and mention of the grant of the patent: **09.12.2020**
(21) Application number: 10425322.4
(22) Date of filing: 05.10.2010
(51) Int. Cl.: F16K 11/00

(54) **Integrated system for reducing and automatically controlling hydric and energetic consumptions when using water coming from distribution networks of aqueducts**
Integriertes System zur Reduzierung und automatischen Steuerung des Wasser- und Energieverbrauchs bei der Verwendung von Wasser aus Verteilungsnetzwerken von Aquädukten
Système intégré pour la réduction et le contrôle automatique des consommations en eau et en électricité lors de l'utilisation d'eau en provenance de réseaux de distribution d'aqueducs

(43) Date of publication of application: 11.04.2012
(73) Proprietor: Capasso, Vincenzo, 80034 Marigliano (NA) (IT)
(72) Inventor: Capasso, Vincenzo, 80034 Marigliano (NA) (IT)
(74) Representative: Garavelli, Paolo

(56) References cited:
- EP-A1- 1 933 217
- WO-A1-2009/067083
- DE-U1-202007 008 808

## Description

The present invention relates to a system for reducing and automatically controlling hydric and energetic consumptions when using water coming from distribution networks of aqueducts.

In order to describe the technical and structural features of the technologic system of the present invention, it is necessary to state some considerations about the prior art, relating both to hydraulic plants, and to currently existing solutions whose aim is reducing hydric consumptions. Therefore, it is necessary to perform a comparison between two types of plants, the electric and the hydraulic ones: this comparison allows understanding the reasons at the base of the present invention.

It is known that, next to the current outlet points of an electric plant, the intensity of delivered energy is recognised; for hydraulic plants, instead, the only worry for those who manufacture them is making water reach the delivery points, but this does not provide any certainty either on how or on how much water arrives in the points of use.

In fact, in the points of use, there is no control on consumptions: they change when the supply pressure and/or the hydraulic load change and oscillate between excessive consumptions and/or low flow-rates. The hydraulic plant, moreover, to guarantee a good water distribution, needs a good hydraulic load. In the current state, there is no arrangement that, installed upstream, allows obtaining hydric savings. But even if it existed, a similar solution would impair the plant functionality, since it would unavoidably generate a flow resistance. Therefore, the only way of controlling the flow-rates, to obtain hydric savings, without impairing the plant efficiency, is intervening downstream, namely directly on its points of use.

Currently existing solutions, known e.g. from WO2009/067083A1 and EP1933217A1, to reduce consumptions directly on points of water use, are flow reducers, low-consumption jet-breaking filters, low-consumption showers, etc. These solutions, if in some cases allow reducing consumptions in points of use, at the same time create a series of inconveniences that are briefly listed below:
- flow reducers reduce consumptions only when the plant has a good pressure: otherwise, when hot sanitary water is similtaneously used at home, above all during certain time ranges (morning and/or evening) in many delivery points, a consequent flow resistance occurs, that creates discomforts to users, that have a reduced flow which is not suitable to satisfy their needs. When the contemporaneity index is exceeded, flow reducers does not guarantee a good service any more, since, based on a passage section with a fixed hole having small sizes, they create resistance to the free passage of water;
- such devices are subjected to be easily clogged and get fouled, due to sediment residuals (soil, metals, rust) and to limestone present in water;
- they are often used individually, only in some points and not on the whole plant, and therefore they do not perform a total control of delivery points;
- low-consumption jet-breaking filters, in addition to the above mentioned inconveniences, generate another problem, even more worrysome, namely the accumulation of sediment solids on their protecting net. These accumulations are often the reason for the formation of bacterial colonies that, when stagnating, impair hygiene and safety when using water.

Object of the present invention is solving the above prior art problems, by providing a system for reducing and automatically controlling hydric and energetic consumptions when using water coming from distribution networks of aqueducts. Such system has the following advantages:
- concretely performing an integrated, efficient and economic management of hydric resources coming from distribution networks;
- allowing all those that want to use it, to extremely easily install it on their own plant, without particular technical knowledge and without having to require specialised tehnical interventions;
- offering to those that use it the chance of having a better service at lower costs;
- through the special valves with which it is equipped, automatically controlling water flow-rates on all points of use of an hydraulic plant;
- reducing hydric and energetic consumptions (hot water production) when using water coming from distribution networks of aqueducts;
- improving service quality and plant efficiency.

The above and other objects and advantages of the invention, as will appear from the following description, are obtained with a system as claimed in Claim 1. Preferred embodiments and non-trivial variations of the present invention are the subject matter of the dependent claims.

The present invention will be better described by some preferred embodiments thereof, provided as a non-limiting example, with reference to the enclosed drawings, in which:
- Figure 1 is a cut-away perspective view of a mixing valve according to the prior art;
- Figure 2 is a schematic side view of an installation mode of the mixing valve of Fig. 1;
- Figure 3 is a cut-away perspective view of a modulating valve according to the prior art;
- Figure 4 is a schematic side view of an installation mode of the modulating valve of Fig. 3;
- Figure 5 is a cut-away perspective view of an embodiment of the mixing valve according to the present invention;
- Figures 6 and 7 are two schematic side views that show the installation of the valve of Fig. 5;
- Figure 8 is a cut-away perspective view of an embodiment of the modulating valve according to the present invention; and
- Figures 9 and 10 are two schematic side views that show the installation of a valve of Fig. 8.

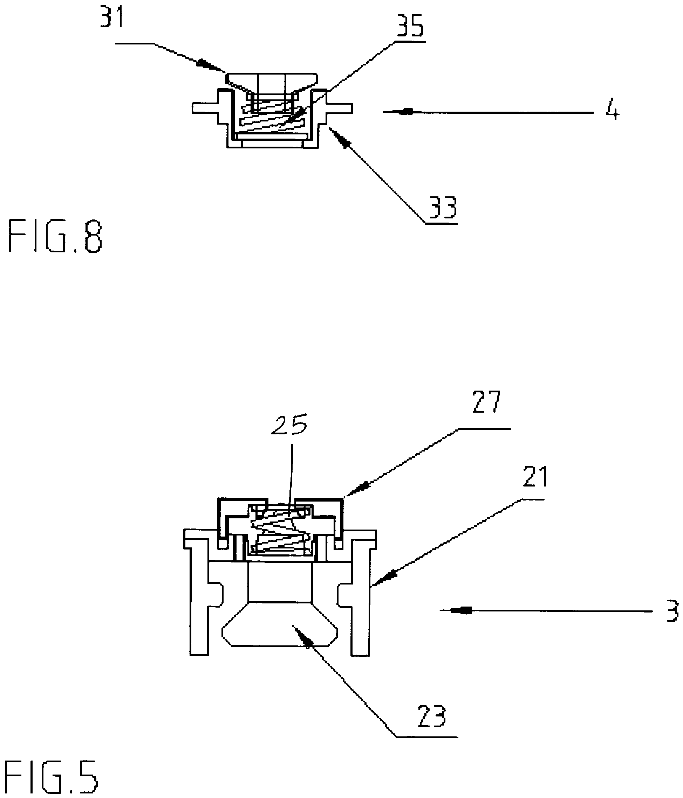

With reference to Figures 5 to 10, the system of the present invention allows reducing and automatically controlling hydric and energetic consumptions when using water coming from distribution networks of aqueducts. This is an integrated system, composed of many elements, whose technical and structural features are totally different from the solutions cited in the part dealing with the prior art. The elements are composed of at least one mixing valve 3 of air and water for taps 8 and at least one flow-rate modulating valve 4 for showers 17.

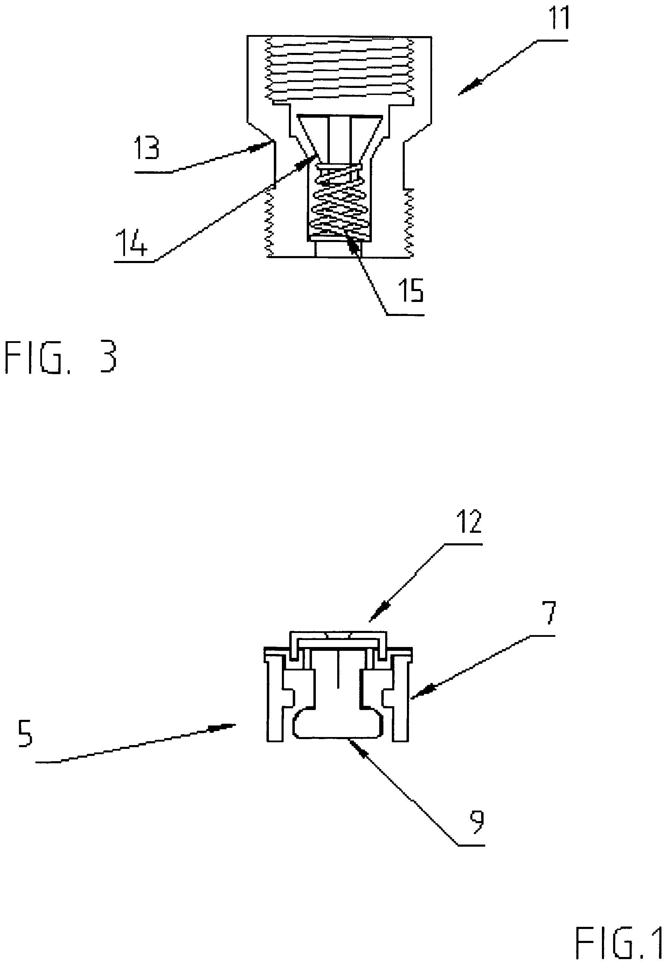

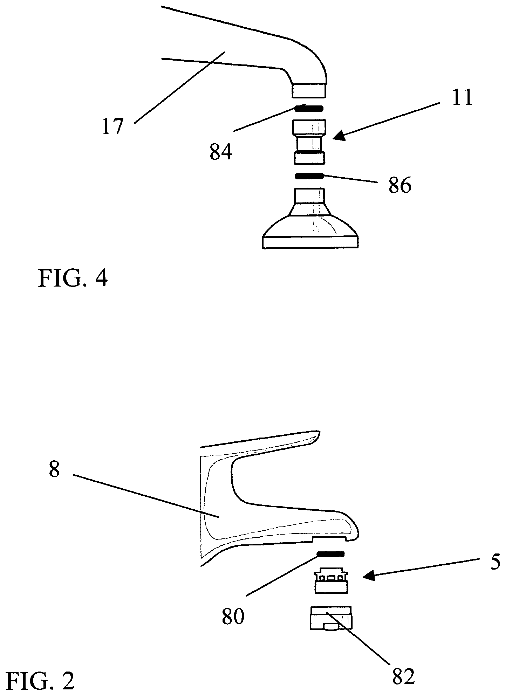

The first performed improvement allows making mixing valves 3 of air and water for taps (washbasin, lavatory and bidet) 8 with variable section that, with respect to previous mixing valves 5 for air and water, whose section was fixed (see Figures 1 and 2), have the characteristic of being self-regulating, independently from water flow-rates, to guarantee a high standard of efficiency in controlling consumptions and pland delivery service quality.

As can be seen by comparing the tables of drawings, respectively Figures 1 and 2 with Figures 5 to 7, the previous type of mixing valve 5 for taps 8 (also called Aerated Jet-Breaking (RA) valve), already evolved with respect to similar products on the market, has been made in acetalic resin of the Delrin type with an assembly of two engaging elements 7, 9, with fixed section, and with smooth and stagnation-preventing walls, without nets made of metal or plastic material, to avoid accumulations of micro-sediments and limestone and the formation of water micro-stagnations.

The mixing valve 5 had a central hole 12 for passing water that dampened the mass of kinetic energy in a dissipating chamber 13 that, going on towards the outlet, created a depression in the top part of the valve 5 entrapping air, with consequent mixing of water and air. This operating principle was at the base of the high reduction of the amount of water.

The prior mixing valve 5 was inserted into a tap 8 (as can be seen in Fig. 2) between a gasket 80 and a fastening ring nut 82.

The new mixing valve 3 for air and water, technologically more evolved, is made preferably of the same anti-limestone, atoxic and heat-resisting material (acetalic resin of the Delrin type), with the substantial difference that its assembly is made of four elements with variable section: a valve body 21, preferably of the crown-with-merlon type, a central conical valve 23, a compressing spring 25 (preferably made of stainless steel 18/10), and a closing cover 27.

Its measures are standard, with universal connections, so that the mixing valve 3 can be easily housed inside every type of taps 8. Its new feature is that is it self-regulating, independently from the operating pressure and the hot or cold water flow-rates delivered from the taps 8 (4 to 7.5 lt/min and 0.5 to 3 bar).

With respect to the previous one, such mixing valve 3 guarantees a better service quality, due to the mechanism with "variable section" that self-regulates and keeps the water flow constant, greatly reducing hydric and energetic consumptions, without impairing hygiene guarantees in compliance with guidelines about the prevention against risks of legionellosis.

In rare cases, where due to an old plant or to taps 8 with particular designs that have no threading, it would not be possible to house such inventive valve 3 inside, it can be installed next to the wall connection of the plant for hygienic services.

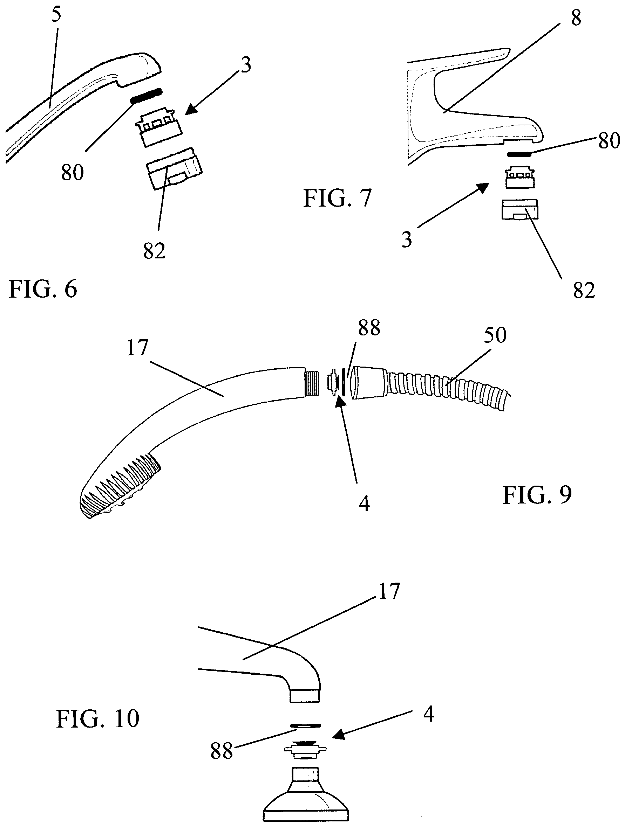

Instead, normally, the mixing valve 3 is housed into the taps 8 always using at least one gasket 80 and at least one fastening ring nut 82, as can be seen in Figures 6 and 7. As shown, the mixing valve 3 is adapted to be placed inside a tap 8 using the gasket 80 between valve 3 and tap 8 body and the fastening ring nut 82 between valve 3 and tap 8 exterior.

In addition to the above mixing valve 3 for taps 8, the system of the invention comprises at least one modulating valve 4 of the flow-rate for a shower 17 with self-regulating flow-rate (7.5/10 l/min) (commonly known also as Low-Flow Dispenser (EBF)). With respect to the known modulating valve 11 (installed with two gaskets 84, 86 as can be seen in Fig. 4), such modulating valve 4 is also preferably made of acetalic resin of the Delrin type, is hygienic, anti-limestone and resistant to thermal shocks; the major difference with respect to the previous one is that it has not any more an external body 13 made of ABS with threaded connections, a valve body 14 and a spring 15, but it has been created for internal application, and is therefore composed of an assembly with three engaging elements: a small central valve 31, a valve body 33, and a compressing spring 35, preferably made of steel 18/10.

The new modulating valve 4 is able to compensate a pressure variable between 1 and 10 bar, in order to keep the flow constant independently from the water pressure, allowing high savings of hot sanitary water. With universal connections, it can be easily installed (as shown), instead of inside the fastening ring nut of the tap delivering mouths, inside the fixed shower 17 or the hose 50 of the same shower 17 in its mobile version, using this time only at least one gasket 88 between valve 4 and shower 17 body, as can be respectively seen in Figures 9 and 10.

Once having installed the system of the invention, hydraulic flow resistances are strongly reduced, with the consequent balanced distribution of water to points of use, which constantly guarantees a comfortable and strong water jet, greatly reducing the consumptions.

In its preferred, but not limiting, practical embodiment, the integrated technologic system of the invention is composed of series of valves 3, 4 (four valves 3, 4, of which three of type 3 for taps 8: washbasin, lavatory, bidet, and one of type 4 for shower 17) devised and designed to allow the automatic control of water flow-rates at every delivery point of the hydraulic plant. The new valves 3, 4 have been modified both technically and aesthetically to guarantee their life and functionality in time, and are devised to be housed exclusively inside the pre-existing taps 8, safeguarding their design.

Summarising, from the technical point of view, the new mixing valve 3 for taps 8 is not any more with fixed section like the previous one, but allows the passage of water with a mechanism with self-regulating variable section, that optimises the operation of the hydraulic plant and reduces hydric and energetic consumptions, in the human use of water coming from distribution networks of aqueducts. The new modulating valve 4 for shower 17, with respect to the past, has not an external body with ABS with threaded connections, but is placed inside the fixed shower 17 or the hose 50 of the same shower 17. The valves 3, 4 are the components of an integrated technologic system, since, once housed inside the taps 8 and the shower 17, they automatically regulate and control water flow-rates on all points of use of an hydraulic plant (washbasin, lavatory, bidet and shower), improving both efficiency and service quality.

Their use environments are several, as many as human uses of water: residential (homes), sports and recreation structures and hotels, hospitals, schools and communities in general.

## Claims

1. System for reducing and automatically controlling hydric and energetic consumptions when using water coming from distribution networks of aqueducts, said system comprising:
- at least one tap (8) containing a mixing valve (3) of air and water, said mixing valve (3) being adapted to be placed inside the tap (8) and being equipped with a variable and self-regulating water-passage section; and
- at least one shower (17) containing a modulating valve (4) of flow-rates, said modulating valve (4) being adapted to be placed inside a fixed shower (17) or inside hoses (50) of a shower (17) and being adapted to compensate the water pressure, in order to keep the flow constant independently from the pressure;
**characterised in that** said at least one mixing valve (3) is composed of four elements with self-regulating variable section:
- a valve body (21) of the crown-with-merlon type;
- a central conical valve (23);
- at least one compressing spring (25); and
- at least one closing cover (27) placed over and upstream of said compressing spring (25) with respect to said flow of water;
wherein said at least one mixing valve (3) is placed inside the tap (8) using a gasket (80) between valve (3) and body of the tap (8) and at least one fastening ring nut (82) between valve (3) and tap (8) exterior;
**and in that** said at least one modulating valve (4) is composed of:
- a valve body (33);
- at least one compressing spring (35); and
- a small central valve (31) projecting from said valve body (33) and placed upstream of said compressing spring (35) with respect to a flow of water entering said modulating valve (4);
wherein said at least one modulating valve (4) is placed inside a shower (17) using only one gasket (86) between valve (4) and body of the shower (17);
**and in that** said system is adapted to subject water flow-rates to checks in various points of use, through said valves (3, 4).

2. Integrated system according to claim 1, **characterised in that** said valves (3, 4) are made of acetalicresin, preferably of the Delrin type.

3. Integrated system according to claim 1, **characterised in that** it is composed of three mixing valves (3) for taps (8) for washbasin, lavatory and bidet, and one modulating valve (4) for showers (17).

## Patentansprüche

1. System für die Reduzierung und die automatische Kontrolle des Wasser- und Energieverbrauchs bei der Verwendung von Wasser von den Wasserleitungsnetzen, das genannte System enthält:
- mindestens einen Hahn (8), der ein Luft- und Wassermischventil (3) enthält, das genannte Mischventil (3) dient dazu, im Hahn (8) angebracht zu werden, und ist mit einem variablen und selbstregulierenden Wasserdurchlaufabschnitt ausgestattet; und
- mindestens eine Dusche (17), die ein Durchflussregelventil (4) enthält, das genannte Durchflussregelventil (4) dient dazu, in einer festen Dusche (17) oder in Schläuchen (50) einer Dusche (17) angebracht zu werden, und dient dazu, den Wasserdruck auszugleichen, um den Wasserfluss unabhängig vom Druck konstant zu halten;
**und ist dadurch gekennzeichnet, dass** das genannte mindestens eine Mischventil (3) aus mindestens vier Elementen mit variablem und selbstregulierendem Abschnitt besteht:
- ein Ventilkörper (21) mit Zinnenkrone;
- ein kleines konisches mittleres Ventil (23);
- mindestens eine Kompressionsfeder (25); und
- mindestens ein Verschlussdeckel (27), der oberhalb der genannten Kompressionsfeder (25) gegenüber dem genannten Wasserfluss angebracht ist;
wobei das genannte mindestens eine Mischventil (3) im Hahn (8) angebracht wurde, indem eine Dichtung (80) zwischen dem Ventil (3) und dem Körper des Hahnes (8) und mindestens ein Befestigungsnut (82) zwischen dem Ventil (3) und der Außenseite des Hahnes (8) verwendet wurde;
**und dadurch,** dass das genannte mindestens eine Wasserdurchflussventil (4) aus Folgendem besteht:
- einem Ventilkörper (33);
- mindestens einer Kompressionsfeder (35); und
- einem kleinen mittleren Ventil (31), das aus dem genannten Ventilkörper (33) hervorsteht und oberhalb der genannten Kompressionsfeder (35) gegenüber einem Wasserfluss angebracht ist, der in das genannte Wasserdurchflussventil (4) einströmt;
wobei das genannte mindestens eine Wasserdurchflussventil (4) in einer Dusche (17) angebracht wurde, indem nur eine Dichtung (88) zwischen dem Ventil (4) und dem Körper der Dusche (17) verwendet wurde;
**und dadurch, dass** das genannte System dazu dient, Wasserdurchflüsse an verschiedenen Verwendungspunkten Kontrollen durch die genannten Ventile (3, 4) zu unterstellen.

2. Integriertes System gemäß Patentanspruch 1, das **dadurch gekennzeichnet ist, dass** die genannten Ventile (3, 4) aus Acetylharz hergestellt wurden, vorzugsweise aus Delrin.

3. Integriertes System gemäß Patentanspruch 1, der **dadurch gekennzeichnet ist, dass** es aus drei Mischventilen (3) für Hähne (8) von Waschbecken, Spülbecken und Bidets und einem Wasserdurchflussventil (4) für Duschen (17) besteht.

## Revendications

1. Système pour la réduction et le contrôle automatique des consommations d'eau et d'énergie dans l'utilisation de l'eau provenant des réseaux d'adduction d'eau potable, le système comprend :
- au moins un robinet (8) contenant une vanne (3) mélangeuse d'air et d'eau qui est apte à être placée à l'intérieur du robinet (8) et est dotée d'une section de passage de l'eau variable et à autorégulation ; et
- au moins une douche (17) contenant une vanne (4) modulatrice de débit qui est apte à être placée à l'intérieur d'une douche fixe (17) ou de tubes flexibles (50) d'une douche (17) mais aussi à compenser la pression de l'eau, de sorte à maintenir constant le flux quelle que soit la pression ;
**caractérisé en ce que,** au moins, une vanne mélangeuse (3) est constituée au moins de quatre éléments à section variable et autorégulation :
- un corps de vanne (21) du type à couronne crénelée ;
- une petite vanne centrale conique (23) ;
- au moins un ressort de compression (25) ; et
- au moins un couvercle de fermeture (27) situé au-dessus et en amont du ressort de compression (25) par rapport au flux d'eau ;
où, au moins, une vanne mélangeuse (3) est placée à l'intérieur du robinet (8) en utilisant un joint (80) entre la vanne (3) et le corps du robinet (8) et au moins une bague de fixation (82) est placée entre la vanne (3) et l'extérieur du robinet (8) ;
**et en ce que,** au moins, une vanne modulatrice (4) est composée de :
- un corps de vanne (33) ;
- au moins un ressort de compression (35) ; et
- une petite vanne centrale (31) en saillie par rapport au corps de la vanne (33) située en amont du ressort de compression (35) par rapport à un flux d'eau qui entre dans la vanne modulatrice (4) ;
où, au moins, une vanne modulatrice (4) est placée à l'intérieur de la douche (17) en utilisant seulement un joint (88) entre la vanne (4) et le corps de douche (17) ;
**et en ce que** le système est apte à soumettre des débits d'eau à des contrôles à différents points d'utilisation, à travers les vannes (3, 4).

2. Système intégré, selon la revendication 1, **caractérisé en ce que** les vannes (3, 4) sont réalisées en résine acétal, de préférence de type Delrin.

3. Système intégré, selon la revendication 1, **caractérisé en ce qu'**il est composé de trois vannes mélangeuses (3) pour robinets (8) de lavabo, évier et bidet et d'une vanne modulatrice (4) pour douche (17).
